(19) Europäisches Patentamt
European Patent Office
Office européen des brevets

(11) **EP 3 255 708 B1**

(12) **EUROPEAN PATENT SPECIFICATION**

(45) Date of publication and mention
of the grant of the patent:
**13.11.2019 Bulletin 2019/46**

(51) Int Cl.:
*H01M 4/136* (2010.01)     *H01M 4/58* (2010.01)
*H01M 4/66* (2006.01)     *H01M 10/0525* (2010.01)
*H01M 4/02* (2006.01)

(21) Application number: **16752530.2**

(22) Date of filing: **18.02.2016**

(86) International application number:
**PCT/JP2016/054632**

(87) International publication number:
**WO 2016/133144 (25.08.2016 Gazette 2016/34)**

(54) **LITHIUM-ION SECONDARY BATTERY**

LITHIUM-IONEN-SEKUNDÄRBATTERIE

BATTERIE SECONDAIRE LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2015 JP 2015032011**

(43) Date of publication of application:
**13.12.2017 Bulletin 2017/50**

(73) Proprietor: **Elexcel Corporation Ltd.**
**Kyoto 6008873 (JP)**

(72) Inventors:
• **Hoshihara Yuji**
**kyoto-shi**
**Kyoto 600-8873 (JP)**
• **Higashizaki Tetsuya**
**kyoto-shi**
**Kyoto 600-8873 (JP)**
• **Koumoto Sousuke**
**kyoto-shi**
**Kyoto 600-8873 (JP)**

(74) Representative: **TBK**
**Bavariaring 4-6**
**80336 München (DE)**

(56) References cited:
**WO-A1-2013/133040     WO-A1-2013/190624
JP-A- 2002 110 162     JP-A- 2009 152 188
JP-A- 2011 165 637     JP-A- 2013 025 902
JP-A- 2013 058 451     JP-A- 2013 110 049
US-A1- 2013 017 440     US-A1- 2013 071 722**

**Description**

BACKGROUND OF THE INVENTION

Field of the Invention

The invention relates to a lithium ion secondary battery application, and more particularly, to a positive electrode active material adopting olivine lithium oxide such as lithium iron phosphate.

Description of Related Art

The energy density and output density etc. of the lithium ion secondary battery are excellent, and therefore the lithium ion secondary battery can be small and lightweight. As a result, the lithium ion secondary battery is extensively used as a power for portable devices with larger power consumption such as mobile phones, notebook personal computers, portable information terminals (personal digital assistants (PDAs)), video cameras, and digital cameras. Based on these properties, among energy saving or energy storing storage battery techniques, the lithium ion secondary battery is a key technique. Regarding energy saving, vehicle applications in an electric vehicle (EV) or a hybrid electric vehicle (HEV) with the object of reducing carbon dioxide emission can be exemplified; regarding energy storage, applications in a fixed power supply effectively utilizing wind power, solar power, and night power can be exemplified. From the practical perspective of the applications, the performance and capacity are expected to be further increased, and the cost further lowered.

Lithium cobalt oxide is most common among positive electrode materials of the lithium ion secondary battery, and due to its excellent performance, lithium cobalt oxide is used in a large number of livelihood equipment. However, cobalt is a rare metal, and is therefore expensive and has a large price fluctuation. Therefore, a lithium ion secondary battery having a nickel-manganese-cobalt material that can reduce the amount of cobalt or an olivine lithium oxide without cobalt or with reduced cobalt as the positive electrode material is being developed. These materials have good balanced performance in a secondary battery, and are therefore being promoted for practical use. Moreover, the olivine lithium oxide is a phosphate of lithium (Li) and a specific metal, and substantially has the same crystal structure as lithium iron phosphate.

However, in the case that olivine lithium oxide such as lithium iron phosphate is used, degradation to charge and discharge cycle battery properties is significant, polarization in particular is increased at high-rate discharge, and battery properties are significantly degraded. The reason is believed to be, for instance: compared to lithium cobalt oxide, lithium nickel oxide, or lithium manganese oxide ($LiMn_2O_4$) etc., the conductivity of olivine lithium oxide is very low; and adhesiveness with metal foil used as the positive current collector is low.

Patent document 1 provides: polishing a metal aluminum foil forming a positive current collector via a blasting method and then performing surface roughening at an average surface roughness Ra less than 0.2 $\mu$m (such as claim 3 to claim 5). Moreover, paragraph 0024 of patent document 1 recites: "in the case of an etching or plating treatment" to "prevent a reduction in strength of the positive current collector", "the average surface roughness Ra of the positive current collector can be slightly greater". However, paragraph 0025 of patent document 1 recites: in the case of, for instance, etching, "the steps are complicated and manufacturing costs are increased".

Moreover, paragraph 0007 to paragraph 0008 of patent document 1 indicate that: in the case of a very small particle size of the primary particle of the lithium iron phosphate, "issues of reduced fill density of the positive electrode active material and reduced overall energy density of the battery exist", and a primary particle having an average particle size of 3 $\mu$m is used in the embodiments (paragraph 0043). Moreover, in patent document 1, although Table 3 to Table 4 recite experimental data on "discharge capacity per 1 g of active material", experimental data is not provided for the degradation after charge and discharge cycles.

Paragraph 0029 of patent document 2 recites: when a positive electrode is formed using an olivine lithium oxide such as lithium-nickel-manganese-cobalt composite oxide, "average primary particle size" should be set to "generally 0.4 $\mu$m or less...most preferably 0.2 $\mu$m or less". Moreover, regarding the average surface roughness Ra of the positive current collector, claim 1 etc. recite "70 nm or more and 5000 nm or less". However, according to paragraph 0086, the embodiments recite about 250 nm (about 0.25 $\mu$m).

On one hand, paragraph 0019 of patent document 3 recites: "the average primary particle size is 0.05 $\mu$m or more and 0.3 $\mu$m or less (range of 0.05 $\mu$m to 0.3 $\mu$m)" of "the positive electrode active material (olivine positive electrode material)". Moreover, claim 3 to claim 4 of patent document 3 recite: a carbon coating of "a surface roughness Ra of 0.3 $\mu$m or more and 1 $\mu$m or less" is formed on the surface of the positive current collector. Moreover, patent document 4 recites: the average surface roughness Ra of the positive current collector containing an aluminum vapor deposition film formed on a resin film should be set to "0.02 $\mu$m to 0.1 $\mu$m".

US 2013 / 071 722 A1 relates to a positive electrode for a rechargeable lithium ion battery including a mixture layer including a positive-electrode active material, a conducting agent, and a binder and a collector having the mixture layer formed on the surface thereof, wherein the positive-electrode active material is a composite oxide having an olivine structure expressed by a formula LiaMxPO4 (where M represents a transition metal including at least one of Fe and Mn and a and x satisfy $0<a\leqq1.1$ and $0.9\leqq x1\leqq1.1$), the conducting agent includes fibrous carbon, and a carbon coating layer is formed on the surface of the collector.

US 2013 / 017 440 A1 relates to a secondary cell electrode including a mix layer containing an active substance, a conductive agent, and a binder which is swollen by coexistence with an electrolytic solution and thus has a volume thereof increased; and a current collector formed of a conductive metal foil, the mix layer being located right on the current collector, wherein the current collector has, in a surface thereof, a first concaved portion which is opened and a first convexed portion forming a wall of the first concaved portion; at least a part of a side surface of at least either one of the first concaved portion and the first convexed portion includes at least either one of a second concaved portion and a second convexed portion; and a mixture containing at least either one of the binder, the conductive material and the active substance is put into a space in the first concaved portion.

JP 2013 / 110 049 A relates to a positive electrode collector foil being used for a lithium ion secondary, wherein in the positive electrode collector foil has a surface on which pits accommodating a particulate positive electrode active material are formed and the pits having a diameter of 0.3-3 $\mu$m are present at a density of $10^3$pits/mm$^2$ or more and $10^5$pits/mm$^2$ or less, and a density of the pits having a diameter exceeding 3 $\mu$m is 10 pits/mm$^2$ or less.

[Current technical documents]

[Patent documents]

Patent document 1: Republication WO2005/086260 (Patent 4286288)
Patent document 2: JP 2013-058451
Patent document 3: JP 2013-187034
Patent document 4: JP 2011-222397

SUMMARY OF THE INVENTION

The scope of the invention is defined by independent claims. The preferred embodiments are set out in dependent claims.

[Issues to be solved by the invention]

An object of the invention is to provide a lithium ion secondary battery that can increase battery capacity retention rate after repeated high-rate charge and discharge in which olivine lithium oxide is used for the positive electrode active material.

[Technical means for solving the issue]

A lithium ion secondary battery of the invention includes a positive electrode, a negative electrode, and a nonaqueous electrolyte, wherein the positive electrode has a positive electrode active material-containing layer containing a positive electrode active material represented by formula (I) below formed on a positive current collector, and the lithium ion secondary battery is characterized by: the average primary particle size of the positive electrode active material is 0.50 $\mu$m or more and 2 $\mu$m or less, and the average surface roughness Ra of the surface of the positive current collector in contact with the positive electrode active material-containing layer is 0.2 $\mu$m or more and 0.6 $\mu$m or less.

$$Li_xMPO_4 \ ... \qquad (I)$$

In formula (I), M is at least one metal atom selected from the group consisting of cobalt (Co), nickel (Ni), iron (Fe), manganese (Mn), copper (Cu), magnesium (Mg), zinc (Zn), titanium (Ti), aluminum (Al), silicon (Si), boron (B), and molybdenum (Mo), and $0<X<2$.

In the lithium ion secondary battery, the positive electrode active material is preferably lithium iron phosphate ($LiFePO_4$).

Moreover, preferably, the specific surface area of at least a portion of the positive electrode active material is 10 m$^2$/g or more and 20 m$^2$/g or less.

[Effects of the invention]

The battery capacity retention rate after repeated high-rate charge and discharge can be increased.

DESCRIPTION OF THE EMBODIMENTS

1. Composition and raw materials of positive electrode active material

The positive electrode active material used in the invention is represented by formula (I) below:

$$Li_xMPO_4 \dots \qquad (I)$$

In formula (I), M is at least one metal atom selected from the group consisting of Co, Ni, Fe, Mn, Cu, Mg, Zn, Ti, Al, Si, B, and Mo, and $0<X<2$. In particular, M preferably contains Fe, more preferably $LiFePO_4$. The theoretical capacity of olivine $LiFePO_4$ is 170 mAh/g, which is high to a certain extent, and is cheap, and can significantly reduce the manufacturing cost of the battery. Moreover, toxicity to humans or the environment is substantially absent, and excellent properties for a positive electrode material such as lack of oxygen desorption and adsorption and high thermal stability are achieved. Therefore, the positive electrode active material is preferably only $LiFePO_4$, or mainly contains $LiFePO_4$.

Raw materials of the positive electrode active material used as the lithium source include lithium salt such as LiOH, $Li_2CO_3$, $CH_3COOLi$, or LiCl; the iron source includes iron salt such as $FeC_2O_4$, $(CH_3COO)_2Fe$, $FeCl_2$, or $FeBr_2$; the manganese source includes manganese salt such as $MnCl_2$; the nickel source includes nickel salt such as NiCl; and the cobalt source includes, for instance, $Co_3O_4$. In the case that M is some other element, the metal salt of each element can also be used.

The phosphorus source can include, for instance, $H_3PO_4$, $(NH_4)_2HPO_4$, or $NH_4H_2PO_4$.

The positive electrode active material can be obtained by mixing the raw materials at a target molar ratio and performing calcination at high temperature. The lithium phosphate can also be directly used, but for the positive electrode active material having low conductivity such as $LiFePO_4$, electron conductivity can be compensated by coating carbon on the surface of the particles. The amount of carbon coating is preferably 0.5 parts by weight or more and 10 parts by weight or less based on 100 parts by weight of the positive electrode active material. For instance, based on 100 parts by weight of the positive electrode active material, the amount of carbon coating is 1 part by weight to 5 parts by weight, in particular 1 part by weight to 3 parts by weight. Moreover, the crystal structure of the powder of the positive electrode active material is not limited to olivine, and can also be, for instance, a layered structure.

2. Average particle size of positive electrode active material

The average primary particle size of the positive electrode active material is 0.50 $\mu$m or more, preferably 0.60 $\mu$m or more, more preferably 0.70 $\mu$m or more, and 2 $\mu$m or less, preferably 1.8 $\mu$m or less, more preferably 1.7 $\mu$m or less, and still more preferably 1.6 $\mu$m or less. If the average primary particle size is less than the lower limit or greater than the upper limit, an increase in battery capacity retention rate after repeated high-rate charge and discharge is not observed, or the increase in battery capacity retention rate after repeated high-rate charge and discharge is insufficient.

Moreover, the average particle size of the primary particle of the positive electrode active material is observed using a scanning electron microscope (SEM), and SEM images of 30,000 to 100,000-magnification can be used to obtain the average value of particle sizes of about 10 to 30 primary particles.

Moreover, the median particle size of the secondary particles of the positive electrode active material is generally 1 $\mu$m or more and 15 $\mu$m or less, such as 2 $\mu$m or more and 5 $\mu$m or less. The median particle size used as the average particle size can be measured by setting the refractive index to 1.24, using the particle size reference as the volume reference, and using a known laser diffraction/scattering particle size distribution measuring apparatus.

The specific surface area (BET) of the positive electrode active material is preferably 10 $m^2$/g or more and 20 $m^2$/g or less, and more preferably 12 $m^2$/g or more and 18 $m^2$/g or less. In this range, the affinity and ion conductivity with the electrolyte solution can be maintained at a high level. Moreover, the specific surface area (BET) can be obtained by varying pressure while adsorbing and desorbing nitrogen. For instance, after preliminary drying was performed on the powder of the positive electrode active material at reduced pressure (vacuum of $5\times10^{-4}$ Torr or less) at 150 °C for 1 hour, a specific surface area measuring apparatus "NOVA 1200" (made by Yuasa Ionics, Co., Ltd.) can be used for measurement by adjusting values of the relative pressure of nitrogen relative to atmospheric pressure to high purity nitrogen (5N8) of 0.01, 0.02, 0.04, 0.07, and 0.10 and using a nitrogen adsorption BET 5 point method.

### 3. Positive current collector

The metal foil forming the positive current collector contains aluminum or aluminum alloy, in particular aluminum foil. Moreover, the metal foil can also be a metal layer disposed on a resin film via, for instance, vapor deposition, sputtering, or lamination. The arithmetic average roughness Ra of the metal foil used in the positive current collector obtained by Japanese Industrial Standards (JIS) B 0601-2001 is 0.2 $\mu$m or more and 0.6 $\mu$m or less. If the surface roughness is less than 0.2 $\mu$m, then an increase in the battery capacity retention rate after repeated high-rate charge and discharge is not observed, or the battery capacity retention rate after repeated high-rate charge and discharge is insufficient. Moreover, in the case that the surface roughness is set to over 0.6 $\mu$m, in general, a low mechanical strength of the metal foil results in easy breakage of the metal foil in the electrode coating step and the electrode processing step, such that operation is difficult. Moreover, the arithmetic average roughness Ra can be measured by, for instance, using a laser microscope (such as the 3D measurement laser microscope OLS4000 made by Olympus) and setting the laser spot diameter to 0.4 $\mu$m.

The metal foil having the specified surface roughness above can be readily manufactured via electrochemical (electrolytic) etching or other fine processing. In a preferred embodiment, the positive current collector is an etched aluminum foil used in, for instance, an aluminum electrolytic capacitor. In a classic example, the thickness of the aluminum foil used is 5 $\mu$m to 150 $\mu$m, in particular 10 $\mu$m to 30 $\mu$m. Moreover, via electrolytic etching, holes (etch pits) having substantially uniform diameter and depth can be disposed in a relatively uniform distribution. The holes disposed on the metal foil via etching or other fine processing are preferably non-vias, in particular in terms of the aluminum foil strength, the holes ideally do not reach the core of the aluminum foil. However, a portion or all of the above can be vias as needed. Moreover, the etching treatment for achieving a rough surface can be performed on two sides, and can also be performed only on the side in contact with the positive electrode active material. Moreover, as needed, when electrolytic etching treatment is performed, to refine the etch pits in a regular manner, mechanical imprinting, installation of a mask material, or printing of a masking film etc. can also be performed.

The electrolytic etching treatment for achieving the specified surface roughness Ra includes applying a DC or AC in a chloride aqueous solution to selectively dissolve the aluminum surface. In a preferred embodiment, the etching is anisotropic etching, and etching is performed in the thickness direction, and compared to the diameter of the holes, the depth of the holes is greater, such as 3 times or more. In a preferred embodiment, via an electrolytic etching treatment, the surface area of the etched aluminum foil compared to smooth aluminum foil (flat aluminum foil) before treatment is, for instance, expanded 10 to 150 times. The etched aluminum foil can directly adopt a commercial product used in a low pressure (area expansion rate of 60 to 150 times) or high pressure (area expansion rate of 10 to 30 times) aluminum electrolytic capacitor having the specified surface roughness Ra. For instance, an etched aluminum foil having a surface roughness Ra in the specified range can be selected from the "low-pressure anode foil" and the "medium high-pressure anode foil" series (http://www.jcc-foil.co.jp/product/index.html) of Japan Electric Storage Industry Co., Ltd. or "anode foil for aluminum electrolytic capacitor" of Showa Electric Co., Ltd.

The etched aluminum foil used as the positive current collector preferably has a purity of 99% or more, and more preferably has a purity of 99.5% or more. To obtain the etched aluminum foil, aluminium foil can be immersed in an electrolyte solution containing chloride ions such as salt or hydrochloric acid and then applying AC or DC, alternately applying AC and DC, or applying both AC and DC at the same time. Specifically, cleaning can be performed by immersing the aluminum foil in sodium hydroxide, and after leaching in a nitric acid aqueous solution, AC is applied in an electrolyte solution containing hydrogen chloride and a small amount of aluminum chloride at 30 °C.

### 4. Binder and dispersion medium

Any general binder used in a lithium ion secondary battery can be used for the binder for manufacturing the positive electrode and the negative electrode. Examples can include: polyvinylidene fluoride (PVDF), polytetrafluoroethylene, polyvinyl chloride, polyvinylpyrrolidone, or a mixture thereof. In particular, polyvinylidene fluoride can suitably be used.

The dispersion medium for manufacturing the positive electrode and the negative electrode can be any dispersion medium generally used in a lithium ion secondary battery, and examples can include, for instance: N-methylpyrrolidone or toluene, wherein N-methylpyrrolidone can be suitably used.

### 5. Conductive agent

The conductive agent for manufacturing the positive electrode and the negative electrode can include a conductive agent in 1 wt% or more and having an average particle size of 3 $\mu$m or more and 12 $\mu$m or less. By using a conductive agent in a specific amount and having an average particle size in the range, the fluidity of the coating can be improved, and increase in viscosity can be inhibited. Moreover, effects such as an increase in the fill rate or bonding in the pressing step can be obtained, such that battery life can be extended. Moreover, the average particle size can be measured by a laser diffraction scattering method.

The shape of the conductive agent for manufacturing the positive electrode can be any of spherical (granular), scaly, or fibrous, and in the case of scaly, fibrous, or a mixture thereof, the fill rate and bonding in the positive electrode pressing step are increased, and drawbacks such as peeling do not readily occur, and therefore these shapes are preferred.

Moreover, the BET specific surface area of the conductive agent for the positive electrode is preferably 8 $m^2$/g or more and 30 $m^2$/g or less. If the BET specific surface area is less than 8 $m^2$/g, then the contact area with the active material is reduced, and increase in impedance is greater. If greater than 30 $m^2$/g, then increase in the viscosity of the resulting coating is greater, and coating is difficult as a result.

From the perspective of meeting the above conditions, the conductive agent for the positive electrode can suitably include a conductive carbon material having a high aspect ratio (large length-to-diameter ratio or diameter-to-thickness ratio) such as graphite or carbon fiber. Among commercial products, the following can, for instance, be suitably used: synthetic Graphite KS Series (graphite KS series) (KS4, KS6, and KS10) made by Timcal, scaly synthetic Graphite SFG Series (graphite SFG series) (SFGS6 and SFG10) made by Timcal, or vapor carbon fiber (VGCF-H) made by Showa Electric Co., Ltd.

In particular, via the addition of a scaly or fibrous carbon material having 1 part by mass to 2 parts by mass based on 100 parts by mass of the positive electrode active material and having an average primary particle size of 3 $\mu$m to 20 $\mu$m before cohesion, effects such as improved fluidity of the coating, inhibited increase in viscosity, and increased fill rate and bonding in the pressing step are significant.

Moreover, from the perspectives such as increasing the fill rate and bonding in the positive electrode pressing step and preventing peeling, one or two or more 2nd conductive components selected from the group consisting of conductive materials having an average particle size of 1 $\mu$m or less is preferably mixed in the conductive agent having high aspect ratio. The BET specific surface area of the 2nd conductive component is preferably 50 $m^2$/g or more.

The 2nd conductive component can include a granular conductive carbon material such as conductive carbon black or acetylene black. Among commercial products, the following, for instance, can suitably be used: conductive carbon black Super P Series and Super P Li Series of Timcal, Ketjen Black (EC or EC600JD) made by Lion Co., Ltd., or acetylene black DENKA BLACK (registered trademark) made by Electrochemical industry Co., Ltd.

One of the conductive agents can be used, or two or more can be used.

The amount of the conductive agent is preferably 0.1 parts by weight to 15 parts by weight based on a total amount of 100 parts by weight of the positive electrode active material.

6. Lithium ion secondary battery

The lithium ion secondary battery of the invention includes a positive electrode, a negative electrode, and an electrolyte layer, and the positive electrode contains the positive electrode active material and the conductive agent.

The positive electrode can be obtained via the following method: mixing the positive electrode active material and a conductive agent component, and adding and dispersing the powder mixture in a binder to form a positive electrode coating diluted to the desired concentration as needed, and then coating the resulting coating on the surface of a positive current collector such as aluminum foil and drying the positive current collector. Next, a rolling treatment etc. is performed as needed to obtained the specified press density.

To sufficiently maintain the inherent electron conductivity of the positive electrode mixed material layer during charge and discharge at high-rate current, the thickness of the positive electrode mixed material layer containing the positive electrode active material and the conductive agent formed on the surface of the positive current collector is preferably 50 $\mu$m or less per side. If the thickness of the positive electrode mixed material layer is too great, then the electron conductivity of the positive electrode mixed material layer in the thickness direction is reduced and resistance is increased, and therefore life properties at high-rate charge and discharge may be significantly reduced.

Lithium metal or lithium ions preferably can be embedded/desorbed in the negative electrode, and the material composition thereof is not particularly limited, and a known material such as alloy, silicon, or hard carbon can be used.

Specifically, a material obtained by mixing the negative electrode active material and the binder can be coated on the current collector to obtain the negative electrode.

The negative active material can include a known active material without particular limit. The following can be exemplified: a carbon material such as natural graphite, artificial graphite, difficultly graphitized carbon, or easily graphitized carbon, a metal material such as metal lithium or alloy, or tin compound, or lithium transition metal nitride, crystalline metal oxide, amorphous metal oxide, or conductive polymer etc.

The current collector for the negative electrode can include, for instance, foil obtained by processing copper and nickel etc. into a mesh, punched metal, foam metal, or a plate.

The electrode density of the negative electrode is set to 1.55 g/cm$^3$ or more, preferably set to 1.65 g/cm$^3$ or

more. If the electrode density is less than 1.55 g/cm$^3$, then the desired battery life is not readily obtained.

The electrolyte layer is held between the positive electrode layer and the negative electrode layer, and contains an electrolyte solution or a polymer or polymer gel electrolyte in which electrolyte salt is dissolved. When an electrolyte solution or polymer gel electrolyte is used, a separator is ideally also used. The separator has the effects of, for instance, electrically insulating the positive electrode and the negative electrode and maintaining the electrolyte solution.

The electrolyte solution can be any electrolyte solution generally used in a lithium secondary battery, and contains a general electrolyte solution such as organic electrolyte solution and ionic liquid.

The electrolyte salt can include, for instance: $LiPF_6$, $LiBF_4$, $LiClO_4$, $LiAsF_6$, $LiCl$, $LiBr$, $LiCF_3SO_3$, $LiN(CF_3SO_2)_2$, $LiC(CF_3SO_2)_3$, $LiI$, $LiAlCl4$, $NaClO_4$, $NaBF_4$, or $NaI$, in particular inorganic lithium salt such as $LiPF_6$, $LiBF_4$, $LiClO_4$, or $LiAsF_6$ or organic lithium salt represented by $LiN(SO_2C_xF_{2x+1})(SO_2C_yF_{2y+1})$. Here, x and y represent 0 or integers of 1 to 4, and x+y is 2 to 8.

The organic lithium salt can specifically include, for instance: $LiN(SO_2F)_2$, $LiN(SO_2CF_3)(SO_2C_2F_5)$, $LiN(SO_2CF_3)(SO_2C_3F_7)$, $LiN(SO_2CF_3)(SO_2C_4F_9)$, $LiN(SO_2C_2F_5)_2$, $LiN(SO_2C_2F_5)(SO_2C_3F_7)$, or $LiN(SO_2C_2F_5)(SO_2C_4F_9)$.

In particular, if $LiPF_6$, $LiBF_4$, $LiN(CF_3SO_2)_2$, $LiN(SO_2F)_2$, or $LiN(SO_2C_2F_5)_2$ is used as the electrolyte, then electrical properties are good, and therefore these compounds are preferred.

One of the electrolyte salts can be used, and two or more can also be used.

The organic solvent used to dissolve the electrolyte salt is not particularly limited as long as it is an organic solvent generally used in the nonaqueous electrolytic solution of a lithium secondary battery, and examples can include, for instance: a carbonate compound, lactone compound, ether compound, cyclohexane compound, dioxolane compound, ketone compound, nitrile compound, or halogenated hydrocarbon compound. Specifically, the following can be included: carbonate such as dimethyl carbonate, methyl ethyl carbonate, diethyl carbonate, ethylene carbonate, propylene carbonate, ethylene glycol dimethyl carbonate, propylene glycol dimethyl carbonate, ethylene glycol diethyl carbonate, or vinylene carbonate; lactone such as $\gamma$-butyrolactone; ether such as dimethoxyethane, tetrahydrofuran, 2-methyltetrahydrofuran, tetrahydropyran, or 1,4-dioxane; sulfolane such as sulfolane or 3-methylcyclobutane; dioxolane such as 1,3-dioxolane; ketone such as 4-methyl-2-pentanone; nitrile such as acetonitrile, propionitrile, valeronitrile, or benzonitrile; halogenated hydrocarbon such as 1,2-dichloroethane; other ionic liquids such as methyl formate, dimethylformamide, diethylmethylamide, dimethyl sulfoxide, imidazolium salt, or quaternary ammonium salt etc. Moreover, a mixture of these compounds can also be used.

Among these organic solvents, a nonaqueous solvent containing one or more selected from the group consisting of carbonates is preferred due to excellent solubility, dielectric constant, and viscosity of the electrolyte.

The polymer compound used in the polymer electrolyte or polymer gel electrolyte can include, for instance: polymer such as ether, ester, siloxane, acrylonitrile, vinylidene fluoride, hexafluoropropylene, acrylate, methacrylate, styrene, vinyl acetate, vinyl chloride, or oxetane or a polymer having a copolymer structure thereof or a crosslinked body thereof. The polymer can include one or two or more. The polymer structure is not particularly limited, but preferably includes a polymer having an ether structure such as polyethylene oxide.

In a liquid battery, the electrolyte solution is housed in a battery container, in a gel battery, a precursor solution obtained by dissolving a polymer in an electrolyte solution is housed in a battery container, and in a solid electrolyte battery, a polymer before crosslinking in which an electrolyte salt is dissolved is housed in a battery container.

The separator can include a separator generally used in a lithium ion secondary battery without particular limit, and examples can include, for instance: porous resin containing, for instance, polyethylene, polypropylene, polyolefin, or polytetrafluoroethylene, ceramic, or nonwoven fabric.

7. Aging treatment

In the manufacture of the lithium ion secondary battery of the invention, heating is performed after initial charging and three or more charge and discharge aging treatments are repeatedly performed to further increase discharge capacity. The heating is preferably performed at around 40 °C to 50 °C.

Examples

In the following, the invention is more specifically described via examples, but the invention is not limited to the following examples.

[Manufacture of positive electrode]

86 g (containing covered carbon) of the positive electrode active material $LiFePO_4$ was measured and was dry mixed with a total of 8 g of a conductive agent mixture using a mixer. The conductive agent mixture was obtained by pre-mixing 5 g of carbon black "Super P (average particle size: 1 $\mu$m or less, BET specific surface area: 50 m$^2$/g or more)" made by Timcal used as a granular conductive agent, 2 g of graphite SFG series "SFG6 (average particle size: 3 $\mu$m or more, BET specific surface area: 30 m$^2$/g or less)" made by Timcal used as a conductive agent having high aspect ratio, and 1 g of "VGCF-H (length: 10 $\mu$m to 20 $\mu$m, diameter: 150 nm, BET specific surface area: 13 m$^2$/g for the average primary particle size)" made by Showa Denko in a mixer.

The powder mixture obtained by dry mixing the positive electrode active material and the conductive agent was added in 60 g (solid content of 6 g) of a PVDF solution used as the binder, and then the mixture was dispersed using a planetary mixer. Next, 109 g of N-methyl-2-pyrrolidone was added for dilution to make the solid content 38 wt% so as to obtain a positive electrode coating. The PVDF solution used here is a mixture in solid content equivalents of 1/1 of the KF binder #7208 (8 wt% of NMP (N-methyl-2-pyrrolidone) solution) and KF binder #9130 (13 wt% of NMP solution) made by KUREHA Co., Ltd. The coating having the specified coating weight after drying obtained by the method was coated on an etched aluminum foil (thickness: 15 $\mu$m), and then hot air drying was performed. Next, after drying was performed at reduced pressure at 130 °C, a rolling treatment was performed to obtain the specified press density. A positive electrode formed by a positive electrode active material is obtained via the method.

[Manufacture of etched aluminum foil]

(Example 1)

An acidic aqueous solution containing 0.3 mass% of hydrogen fluoride and 0.5 mass% of nonionic surfactant and used as a pretreatment solution having a liquid temperature of 25 °C was seeped into a polyolefin sponge on a portion of the surface of an aluminum hard foil (JIS A 3003-H18; composition: aluminum: 96.90 mass%, silicon: 0.6 mass%, iron: 0.7 mass%, copper: 0.2 mass%, manganese: 1.5 mass%, others: 0.1 mass%) having a thickness of 20 $\mu$m, and then coating was performed at a coating amount of 10 g/m$^2$, and after 20 seconds, the surface of the aluminum hard foil was washed with water. Next, the aluminum hard foil was immersed in a post-treatment solution containing 12 mass% of hydrochloric acid and 15 mass% of aluminum chloride and having a liquid temperature of 35 °C for 60 seconds. The surface roughness Ra of the resulting etched aluminum foil is 0.6 $\mu$m.

(Example 2)

An aluminum hard foil was immersed in a post-treatment solution for 40 seconds, and other than this, the manufacture was performed in the same manner as example 1. The surface roughness Ra of the resulting etched aluminum foil is 0.4 $\mu$m.

(Example 3)

An aluminum hard foil was immersed in a post-treatment solution for 30 seconds, and other than this, the manufacture was performed in the same manner as example 1. The surface roughness Ra of the resulting etched aluminum foil is 0.3 $\mu$m.

(Example 4, example 5, and comparative example 2)

An aluminum hard foil was immersed in a post-treatment solution for 20 seconds, and other than this, the manufacture was performed in the same manner as example 1. The surface roughness Ra of the resulting etched aluminum foil is 0.2 $\mu$m.

(Comparative example 4)

An aluminum hard foil was immersed in a post-treatment solution for 140 seconds, and other than this, the manufacture was performed in the same manner as example 1. The surface roughness Ra of the resulting etched aluminum foil is less than 1.0 $\mu$m.

[Manufacture of negative electrode]

93.5 g of graphite used as the positive electrode active material was measured, and 1.5 g of carbon black Super P made by Timcal used as the conductive agent was measured, and the components were dry mixed using a mixer. Next, the resulting powder mixture was added to 38.5 g (solid content of 5 g) of a PVDF solution (KF binder #9130 (13 wt% of NMP solution) made by Wu Yu Co., Ltd.) used as the binder, and the mixture was dispersed using a planetary mixer. Next, 94 g of N-methyl-2-pyrrolidone was added for dilution to make the solid content 44 wt% so as to obtain a negative electrode coating.

The resulting negative electrode coating having the specified coating weight after drying was coated on an electrolytic copper foil (thickness: 10 $\mu$m), and then hot air drying was performed. Next, after drying was performed at reduced pressure at 130 °C, a rolling treatment was performed to obtain the specified press density. A negative electrode formed by a negative electrode active material was obtained via the method.

[Manufacture of lithium ion secondary battery]

A single polyolefin separator (#2500 made by Cell Guard; thickness: 25 $\mu$m, porosity: 55%, Gurley permeability: 200 seconds) used as the separator was stacked between the resulting positive electrode and negative electrode, and a positive electrode terminal and a negative electrode terminal were welded to each positive and negative electrode via ultrasound. The laminated body was placed in an aluminum laminated packaging, and an opening portion for injection was left to perform hot sealing. A pre-injection battery having a positive electrode area of 56.2 cm$^2$ and a negative electrode area of 60.5 cm$^2$ was manufactured. Next, an electrolyte solution obtained by dissolving $LiPF_6$ in a solvent in which ethylene carbonate and diethyl carbonate were mixed was injected, and the opening portion was hot sealed to obtain a battery for evaluation.

[Charge and discharge evaluation of lithium ion secondary battery]

The high-rate charge and discharge evaluation was performed according to the capacity retention rate (based on 0.2 C capacity) at a discharge or charge of 10 C (Coulomb) current value. Moreover, the 10 C current value represents charging and discharging at 10 times the current value of 1C current value of battery capacity discharge within 1 hour, and the charge or discharge was performed for about 6 minutes.

The rapid charge cycle evaluation was performed according to the capacity retention rate of repeated cycles of constant current constant voltage (CCCV) charge and constant current (CC) discharge at a current value of 6 C. Moreover, the 6 C current value represents charging and discharging at 6 times the current value of 1C current value of battery capacity discharge within 1 hour, and the charge or discharge was performed for about 10 minutes. These evaluation results are shown in Table 1. Moreover, in the following, in comparative example 1 and comparative example 3, unetched flat aluminum foil was used. Although the surface roughness Ra was not measured, the surface roughness Ra has to be significantly less than 0.2. Moreover, in example 4 and example 5, the same etched aluminum foil was used, and positive electrode active materials having different average primary particle sizes were used.

[Table 1]

| | Surface roughness Ra $\mu$m | Average primary particle size $\mu$m | 10 C discharge retention rate (based on 0.2 C capacity) % | 10 C charge retention rate (based on 0.2 C capacity) % | 6 C charge and discharge 3000-cycle retention rate % | 10 C charge and discharge 3000-cycle retention rate % |
|---|---|---|---|---|---|---|
| Example 1 | 0.6 | 1.5 | 81 | 94 | 90 | - |
| Example 2 | 0.4 | 1.5 | 80 | 94 | 88 | - |
| Example 3 | 0.3 | 0.8 | 75 | 93 | 94 | 92 |
| Example 4 | 0.2 | 1.5 | 81 | 94 | 87 | - |
| Example 5 | 0.2 | 0.9 | - | - | 90 | - |
| Comparative example 1 | <<0.2 | 1.5 | 79 | 91 | 77 | - |
| Comparative example 2 | 0.2 | 6 | 88 | 95 | - | 82 |
| Comparative example 3 | <<0.2 | 6 | 89 | 96 | - | 82 |

[Strength evaluation of positive electrode]

The strength of electrode coating and electrode processing performed on etched aluminum foils having different surface roughnesses was evaluated. The evaluation results thereof are shown in Table 2. As described above, comparative example 1 is a flat aluminium foil, and the aluminum foil used in comparative example 4 has a surface roughness Ra of about 1 μm after over-etching.

[Table 2]

|  | Surface roughness Ra μm | Transportability of electrode coated foil (○/Δ/×) | Processability of electrode processing foil (○/Δ/×) | Remarks |
|---|---|---|---|---|
| Comparative example 4 | 0.6<< | Δ | × | Weak foil strength, difficult operation |
| Example 1 | 0.6 | ○ | Δ | Weak foil strength, but operable |
| Example 2 | 0.4 | ○ | ○ | - |
| Example 3 | 0.3 | ○ | ○ | - |
| Example 4 | 0.2 | ○ | ○ | - |
| Comparative example 1 | <<0.2 | ○ | ○ | - |

As shown in Table 1, compared to the case (comparative example 1) in which a flat foil without surface etching was used, for each example in which the surface roughness Ra of the aluminum foil used as the positive current collector and the average primary particle size of the positive electrode active material are in the specified ranges, in 3000 cycles of high-rate charge and discharge at 6 C, the capacity retention rate is increased and is 13% or more, and life properties are improved. Moreover, high-rate 10 C during discharge is 2% or more and 10 C during charge is 3% or more, and capacity retention rate is increased.

Moreover, although not shown in the tables, compared to using a flat foil (comparative example 1), in the examples, the discharge average voltage in high-rate 10 C discharge is increased and is about 0.13 V, and energy density can be expected to increase. Moreover, although not shown in the tables, in the case that lithium iron phosphate (LFP; $LiFePO_4$) having an average primary particle size greater than 2 μm was used in the positive electrode active material, the effect of surface etching was not observed, and an improvement in capacity retention rate in high-rate charge and discharge or high-rate cycle charge and discharge was not confirmed.

As shown in Table 2, in comparative example 4 in which the surface roughness Ra is too large, the aluminum foil strength is weak, and operation is difficult. In comparison, in example 1, although the aluminum foil strength is slightly insufficient, the aluminum foil is operable. Moreover, for example 2 to example 5 and comparative example 1 in which a flat foil was used, no difference is observed in terms of aluminum foil strength and operability.

[Industrial applicability]

The positive electrode for the lithium ion secondary battery of the invention not only is used to move equipment power supplies, but is also used in electric bicycles, electric chairs, robots, electric cars, and medium or large lithium ion secondary batteries used as emergency power supplies and large capacity fixed power supplies.

**Claims**

1. A lithium ion secondary battery, **characterized in** comprising: a positive electrode, a negative electrode, and a nonaqueous electrolyte, wherein the positive electrode has a positive electrode active material-containing layer containing a positive electrode active material represented by formula (I) below formed on a positive current collector, and in the lithium ion secondary battery,
an average primary particle size of the positive electrode active material is 0.50 μm or more and 2 μm or less, wherein the average primary particle size is determined by observation with a scanning electron microscope at a magnification of 30,000 to 100,000 based on 10 to 30 primary particles, and an average surface roughness Ra of a surface of the positive current collector in contact with the positive electrode active material-containing layer is 0.2 $\mu$m or more and 0.6 $\mu$m or less, wherein the arithmetic average roughness Ra is determined according to JIS B 0601-2001,

$$LixMPO_4 \ldots \qquad (I)$$

in formula (I), M is at least one metal atom selected from the group consisting of cobalt, nickel, iron, manganese, copper, magnesium, zinc, titanium, aluminum, silicon, boron, and molybdenum,

$$0 < X < 2.$$

2. The lithium ion secondary battery of claim 1, **characterized in that**: the positive electrode active material is lithium iron phosphate.

3. The lithium ion secondary battery of claim 1 or 2, **characterized in that**: a specific surface area of at least a portion of the positive electrode active material is 10 $m^2$/g or more and 20 $m^2$/g or less, wherein the specific surface area is a BET specific surface area determined by nitrogen adsorption.

4. The lithium ion secondary battery of any one of claims 1-3, **characterized in that**: the positive current collector is an etched aluminum foil.

**Patentansprüche**

1. Lithium-Ionen-Sekundärbatterie, **dadurch gekennzeichnet, dass** sie umfasst: eine positive Elektrode, eine negative Elektrode und einen nichtwässrigen Elektrolyten, wobei die positive Elektrode eine Positivelektrodenaktivmaterial-enthaltende Schicht aufweist, die ein Positivelektrodenaktivmaterial enthält, das durch die folgende Formel (I) dargestellt ist, die auf einem positiven Stromabnehmer gebildet ist und wobei in der Lithium-Ionen-Sekundärbatterie, eine durchschnittliche Primärteilchengröße des Positivelektrodenaktivmaterials 0,50 $\mu$m oder mehr und 2 $\mu$m oder weniger ist, wobei die durchschnittliche Primärteilchengröße durch Beobachtung mit einem Rasterelektronenmikroskop bei einer Vergrößerung von 30.000 bis 100.000 basierend auf 10 bis 30 Primärteilchen bestimmt wird, und eine durchschnittliche Oberflächenrauhigkeit Ra einer Oberfläche des positiven Stromabnehmers in Kontakt mit der Positivelektrodenaktivmaterialenthaltenden Schicht 0,2 $\mu$m oder mehr und 0,6 $\mu$m oder weniger ist, wobei die arithmetische durchschnittliche Rauheit Ra gemäß JIS B 0601-2001 bestimmt wird,

$$LixMPO_4 \ldots \qquad (I)$$

in Formel (I) ist M zumindest ein Metallatom ausgewählt aus der Gruppe bestehend aus Kobalt, Nickel, Eisen, Mangan, Kupfer, Magnesium, Zink, Titan, Aluminium, Silicium, Bor und Molybdän,

$$0 < X < 2.$$

2. Lithium-Ionen-Sekundärbatterie nach Anspruch 1, **dadurch gekennzeichnet, dass**: das Positivelektrodenaktivmaterial Lithium-Eisenphosphat ist.

3. Lithium-Ionen-Sekundärbatterie nach Anspruch 1 oder 2, **dadurch gekennzeichnet, dass**: eine spezifische Oberfläche von zumindest einem Teil des Positivelektrodenaktivmaterials 10 $m^2$/g oder mehr und 20 $m^2$/g oder weniger beträgt, wobei die spezifische Oberfläche eine durch Stickstoffadsorption bestimmte spezifische BET-Oberfläche ist.

4. Lithium-Ionen-Sekundärbatterie nach einem der Ansprüche 1-3, **dadurch gekennzeichnet, dass**: der positive Stromabnehmer eine geätzte Aluminiumfolie ist.

**Revendications**

1.  Batterie rechargeable au lithium ion, **caractérisé en ce qu'**elle comprend : une électrode positive, une électrode négative, et un électrolyte non aqueux, dans laquelle l'électrode positive a une couche contenant un matériau actif d'électrode positive, contenant un matériau actif d'électrode positive représenté par la formule (I) ci-dessous, formée sur un collecteur de courant positif, et, dans la batterie rechargeable au lithium ion,
la granulométrie primaire moyenne du matériau actif d'électrode positive est de 0,50 μm ou plus et de 2 μm ou moins, laquelle granulométrie primaire moyenne est déterminée par observation au microscope électronique à balayage avec un grossissement de 30 000 à 100 000 sur la base de 10 à 30 particules primaires, et la rugosité de surface moyenne Ra d'une surface du collecteur de courant positif en contact avec la couche contenant un matériau actif d'électrode positive est de 0,2 μm ou plus et de 0,6 μm ou moins, laquelle rugosité moyenne arithmétique Ra est déterminée conformément à la norme JIS B 0601-2001,

$$Li_xMPO_4 \; ... \qquad (I)$$

dans la formule (I), M est au moins un atome métallique choisi dans le groupe constitué par le cobalt, le nickel, le fer, le manganèse, le cuivre, le magnésium, le zinc, le titane, l'aluminium, le silicium, le bore et le molybdène,

$$0 < X < 2.$$

2.  Batterie rechargeable au lithium ion selon la revendication 1, **caractérisée en ce que** le matériau actif d'électrode positive est le phosphate de lithium et de fer.

3.  Batterie rechargeable au lithium ion selon la revendication 1 ou 2, **caractérisée en ce que** la surface spécifique d'au moins une partie du matériau actif d'électrode positive est de 10 m$^2$/g ou plus et de 20 m$^2$/g ou moins, laquelle surface spécifique est la surface spécifique BET déterminée par adsorption d'azote.

4.  Batterie rechargeable au lithium ion selon l'une quelconque des revendications 1 à 3, **caractérisée en ce que** le collecteur de courant positif est une feuille d'aluminium gravée.

**EP 3 255 708 B1**

**REFERENCES CITED IN THE DESCRIPTION**

**Patent documents cited in the description**

- US 2013071722 A1
- US 2013017440 A1
- JP 2013110049 A
- WO 2005086260 A
- WO 4286288 A
- JP 2013058451 A
- JP 2013187034 A
- JP 2011222397 A